# EUROPEAN PATENT SPECIFICATION

(11) **EP 3 967 580 B1**
(45) Date of publication and mention of the grant of the patent: **07.05.2025**
(21) Application number: 20196237.0
(22) Date of filing: 15.09.2020
(51) Int. Cl.: B62D 35/00

(54) **VORTEX DRAG DISRUPTION APPARATUS**
VORRICHTUNG ZUR UNTERBRECHUNG EINES WIRBELSTRÖMUNGSWIDERSTANDS
APPAREIL DE RUPTURE DE TRAÎNÉE TOURBILLONNAIRE

(43) Date of publication of application: 16.03.2022
(73) Proprietor: Stinchcomb, Joseph, Boca Raton, FL 33432 (US)
(72) Inventor: Stinchcomb, Joseph, Boca Raton, FL 33432 (US)
(74) Representative: Hoefer & Partner Patentanwälte mbB

(56) References cited:
- WO-A1-2007/090146
- WO-A2-2014/162158
- CN-A- 103 287 511
- US-A- 4 343 506
- US-A- 4 776 535
- US-A1- 2005 040 669

## Description

### BACKGROUND OF THE INVENTION

### 1. Field of the Invention

The present invention relates to a vortex disruption system according to claim 1.

The present invention relates generally to drag reduction, and more particularly to devices that disrupt the trailing vortex created by the flow of air around a vehicle while traveling.

### 2. Description of Related Art

The pressure drag vortex formed in the wake of vehicles and particularly the type having non-tapered rear ends, such as tractor-trailers, is known to significantly reduce vehicle efficiency while increasing transportation costs. As air flows from the trailing edge of a non-tapered vehicle or trailer, the air converges into a swirling vortex which produces inherent low pressure drag. This low pressure drag formed at the rear of a trailer, combined with high pressure applied to the front of
the vehicle, causes a net pressure differential that generates a force in the opposite direction of travel. The front-to-back pressure differential is the primary source of drag for most large vehicles.

Various attempts have been made to reduce vehicle drag. Such attempts include a host of aerodynamic structures and add-on devices intended to reduce the negative effects created by the low-pressure region formed at the rear of vehicles. For example, U.S. Patent No. 2,800,291, issued to Stephens, discloses the use of surface mounted apparatus to interact with boundary layer flow. U.S. Patent No. 3,724,892, issued to Ridder, discloses the use of vortex generators to alter flow over the roof surface of a vehicle. U.S. Patent No. 5,058,945, issued to Elliott, discloses an array of vortex generators in combination with a bag attachment affixed to the rear of a cargo trailer by straps. U.S. Patent No. 9,682,735, issued to Bacon, discloses attachment of aerodynamic units to the roof of a road vehicle. The published application to Guigne (US 2011/0175395) discloses a drag reducing device for use with transport vehicles.

WO2007/090146 A1 discloses a vortex generator that, in one embodiment, includes an apex having a first width; a rear face having a second width being greater than the first width; a first and second sidewall each extending from the first width of the apex to the second width of the rear face.

US 4 776 535 A discloses a body adapted to move downstream through a fluid that has a downstream extending smooth surface terminating at a blunt base.

The attempts revealed in the background art generally rely on vortex generators intended to function within the confines of boundary layer flow. Such devices differ from vortex disruption devices which are intended to function beyond the surface boundary layer and further to prevent or inhibit the formation of a trailing end vortex behind a moving vehicle. Further, the apparatus disclosed in the background art are burdened by a number of limitations and disadvantages that have prevented widespread acceptance and use. Accordingly, there exists a need for advancements in the transportation field directed to increasing fuel efficiency by disrupting the formation of vortex flow at the rear of large vehicles.

### BRIEF SUMMARY OF THE INVENTION

It is, therefore, an object underlying the present invention to provide a vortex disruption system for vehicles that is able to reduce transportation costs by increasing vehicle fuel efficiency via drag minimization.

The solution of this object is achieved by the features of claim 1.

The dependent claims contain advantageous embodiments of the present invention.

The present invention overcomes the limitations and disadvantages present in the art by providing a system designed to disrupt the trailing edge vortex created by the flow of air around a vehicle as it travels down the highway. Vortex disruption apparatus are permanently or removably installed or attached or incorporated into the design of cargo and passenger vans, busses, box-trucks, tractor-trailer combinations, or any other vehicle. Trailing edge vortex disruption is achieved by use of a plurality of vortex disruption devices positioned in proximity to the trailing end of a vehicle or trailer. The vortex disruption devices are disposed in adjacently spaced relation and extend away from the vehicle or trailer surface well beyond the fluid dynamic laminar boundary layer formed as the vehicle passes through the air. The boundary layer is that fluid layer which has its velocity affected by the boundary shear. Once installed the vortex disruption devices disperse the air flowing over the disrupter while allowing air to flow normally through the spaces between the devices. The vortex disruption devices thereby inhibit the natural convergence of airflow and prevent the formation of a low-pressure vortex beyond the trailing edge of the vehicle.

In a first embodiment, a plurality of fixed vortex disruption devices are secured in spaced relation with the trailing edge of the trailer and secured using a strap. Each fixed vortex disruption device comprises a generally triangular structure having a leading end and a trailing end. Left-hand and right-hand planar surfaces are disposed in diverging and inwardly slanted relation wherein they join along a common upper edge which increases in height from the leading end to the trailing end. When used with the trailer of a tractor-trailer rig, the vortex disruption devices are preferably 12.0 inches long, and when measured at the trailing end, 12.0 inches wide and 6.0 inches tall. **In** a second embodiment, mechanically actuated vortex disruption devices are provided which are configurable between a generally flat stowed configuration and a functional, outwardly projecting deployed configuration.

So, the vortex disruption system according to the present invention is intended to function beyond the surface boundary layer and to prevent or inhibit the formation of a trailing end vortex behind a moving vehicle. This is one of the most important differences between the vortex disruption system according to the present invention and known vortex generators.

Advantageously, the present invention provides a system (apparatus) that reduces vortex drag at the rear of a vehicle.

Another advantage of the present invention is to provide vortex disruption apparatus for minimizing vehicle drag.

Yet another advantage of the present invention is to provide such vortex disruption apparatus that is easy to install and uninstall.

Still another advantage of the present invention is to provide a vortex disruption system for vehicles that is mechanically deployed for use at desired speeds.

These and other objects are met by the present invention which will become more apparent from the accompanying drawing and the following detailed description of the drawings and preferred embodiments.

### BRIEF DESCRIPTION OF THE SEVERAL VIEWS OF THE DRAWINGS

FIG. 1 is a partial side view of a trailer adapted with vortex disruption apparatus in accordance with the present invention;
FIG. 2 is a perspective view thereof;
FIG. 3 is a bottom perspective view of a vortex disruption device;
FIG. 4 illustrates airflow streamlines flowing over vortex disruption apparatus of the present invention;
FIG. 5 is a rear perspective view of a mechanically actuated embodiment partially deployed;
FIG. 6 is a rear perspective view thereof fully deployed;
FIG. 7 is a computer model illustration of air flow streamlines creating a trailing edge vortex as they pass around a conventional tractor trailer; and
FIG. 8 is a computer model illustration of air flow streamlines passing around a tractor trailer adapted with vortex disruption devices in accordance with the present invention.

### DETAILED DESCRIPTION OF THE INVENTION

The present invention may be understood more readily by reference to the following detailed description taken in connection with the accompanying drawing figures, which form a part of this disclosure. It is to be understood that this invention is not limited to the specific devices, methods, conditions or parameters described and/or shown herein, and that the terminology used herein is for the purpose of describing particular embodiments by way of example only and is not intended to be limiting of the claimed invention. Any and all patents and other publications identified in this specification are incorporated by reference as though fully set forth herein.

Also, as used in the specification including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment.

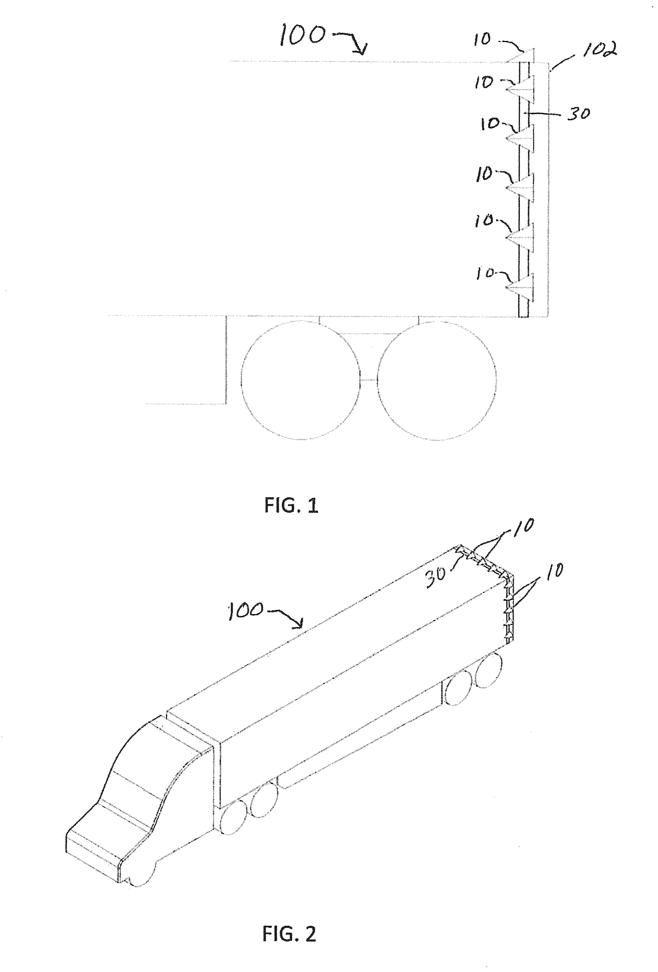

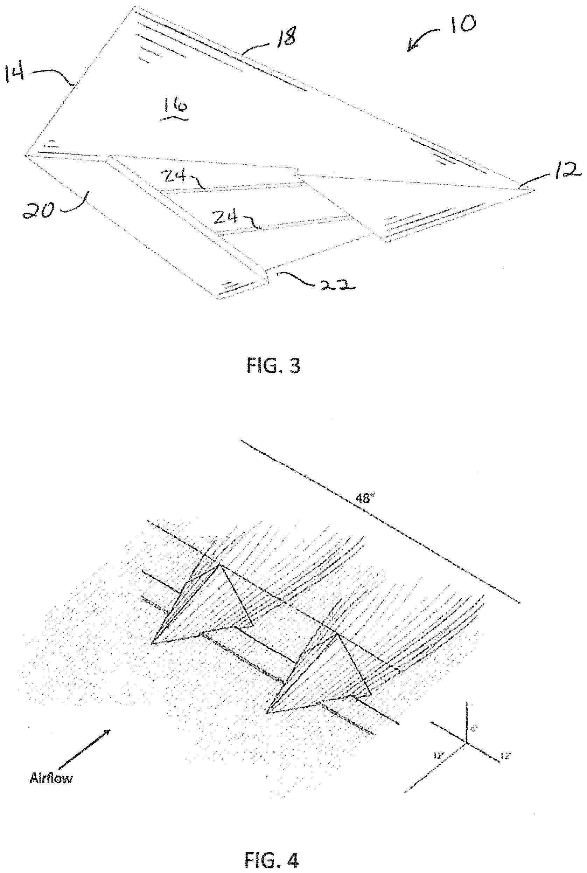

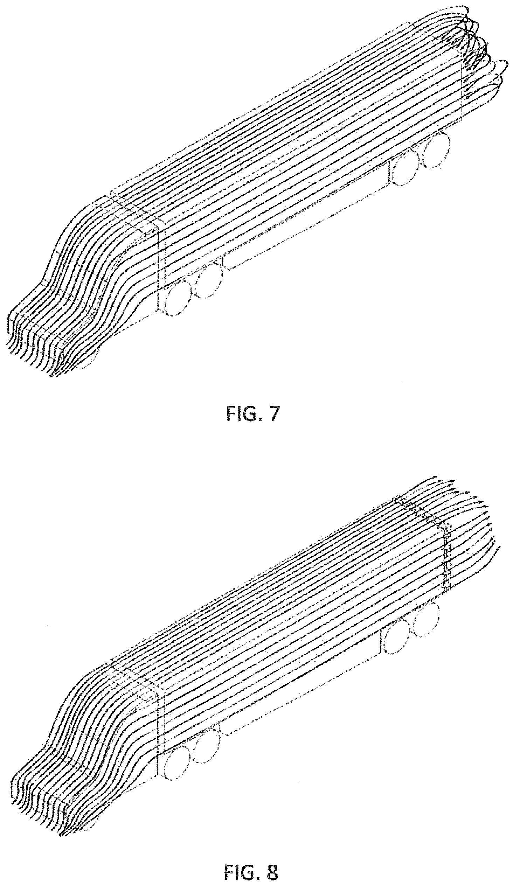

Turning now to the drawings, FIGS. 1 - 8, apparatus designed to disrupt the trailing edge vortex created by the flow of air around a vehicle as it travels at highway speed in accordance with the present invention are disclosed. **In** accordance with the present invention, vortex disruption apparatus are permanently or removably installed or attached to cargo and passenger vans, busses, box-trucks, tractor-trailer combinations, or any other vehicle. As best seen in FIGS. 1 and 2, trailing edge vortex disruption is achieved by use of a plurality of vortex disruption devices 10 positioned in proximity to the trailing edge or end 102 of a vehicle or trailer, referenced as 100. Vortex disruption devices 10 are disposed in adjacently spaced relation and extend away from the vehicle or trailer surface well beyond the boundary layer. Once installed the vortex disruption devices 10 disperse the air flowing over and around each device while allowing air to flow normally through the spaces between the devices as illustrated in FIG. 4. The vortex disruption devices thereby inhibit the otherwise natural convergence of airflow and prevent to formation of a low-pressure vortex beyond the trailing edge of the vehicle as seen in FIG. 7 (vortex created behind trailer without vortex disruption devices) and FIG. 8 (significantly reduced vortex created behind trailer adapted with vortex disruption devices).

**In** a first embodiment, shown in FIGS. 1 - 4, a plurality of fixed vortex disruption devices 10 are secured in spaced relation with the trailing edge 102 of trailer 100. The vortex devices are secured to the trailer using a strap 30. Strap 30 preferably comprises a flat elongated strap body having connectable ends, preferably adapted with a ratchet mechanism (not shown) to allow for sufficient tightening as is known in the art of ratchet straps. Each fixed vortex disruption device 10 comprises a generally triangular structure having a leading end, generally referenced as 12, and a trailing end, generally referenced as 14. Left-hand and right-hand planar surfaces, each referenced as 16, originate at the extreme leading end 12, and are disposed in diverging and inwardly slanted relation wherein they join along a common upper edge 18. Common upper edge 18 originates at the extreme leading end 12 and increases in height as it extends longitudinally rearward from leading end 12 to an open trailing end 14. **In** a preferred embodiment the trailing end 14 terminates within a plane that is perpendicular to the vehicle surface upon which the device is mounted. Each vortex device further includes a bottom 20 which defines a generally acute triangular perimeter shaped in the form of an isosceles triangle wherein the smallest angle is formed at the leading end. Bottom 20 further defines a strap receiving recess 22 extending transversely across the bottom, and a pair of slotted apertures 24 for receiving strap 30 threadedly disposed therethrough. A plurality of vortex disruption devices 10 may thus be affixed to a vehicle using a fastening apparatus, such as a single strap 30 as illustrated in FIGS. 1 and 2. While a strap is disclosed in a first embodiment fastening apparatus for removably securing the vortex devices to the vehicle, alternate fastening apparatus and methods of removable or permanent fixation, including the use of adhesive, magnetic attachment, and/or mechanical fasteners, are considered within the scope of the present invention. The vortex devices are preferably fabricated from foam, fabric, composite material, plastic material, an inflated structure, metal, or any suitable material or structure within the scope of the invention. In addition, the vortex disruption devices may include illumination or lighting systems, such as LED lighting for safety and or area illumination.

As further illustrated in FIG. 4, when used with the trailer of a tractor-trailer rig, the vortex disruption devices 10 are preferably 12.0 inches long, and when measured at the trailing end, 12.0 inches wide and 6.0 inches tall. It is important that the vortex disruption devices are sized with a height that is sufficient so as to extend well beyond the boundary layer. When used in a tractor-trailer application, it has been found that 6.0 inches is sufficient. It should be noted, however, that variations in the disclosed dimensions for the same or other applications remain within the contemplated scope of the present invention. In addition, the vortex disruption devices are installed with the trailing ends thereof spaced from the trailing edge 102 of trailer 100. When used in a tractor-trailer application, it has been found that a 6.0 inch spacing between the trailing end of the vortex disruptor and the trailing end of the trailer is sufficient. It should be noted, however, that variations in the disclosed dimensions for the same or other applications remain within the contemplated scope of the present invention.

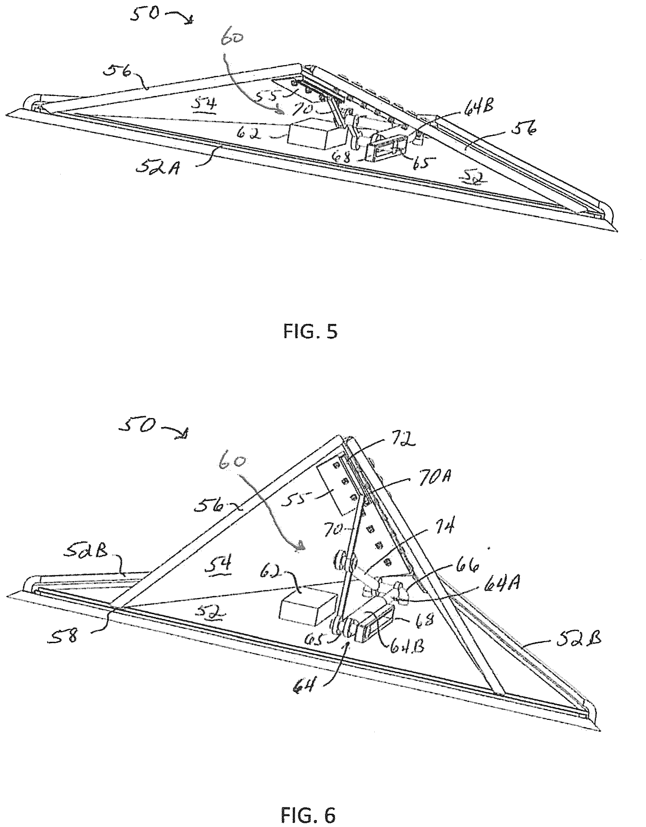

FIGS. 5 and 6 illustrate a mechanically actuated vortex disruption device, generally referenced as 50, in accordance with an alternate embodiment of the present invention. FIG. 5 depicts the mechanically actuated vortex disruption device 50 in a partially deployed configuration, and FIG. 6 depicts the device in a fully deployed configuration. As should be apparent, vortex disruption device 50 may also assume a retracted or non-deployed configuration wherein the device is substantially flat as seen in FIG. 5. Actuation of mechanically actuated device 50 may be manual, electric, hydraulic, mechanical, pneumatic, or any other suitable actuation structure or system.

Each mechanically actuated vortex disruption device 50 includes a base frame 52 and a pair of left-hand and right-hand diffractor plates, each referenced as 54. Diffractor plates 54 are connected along adjacent edges thereof by a hinge connection, 55 which allows for pivotal movement along the central upper edge of plates 54. Further, each diffractor plate has a trailing end 56 with a lower portion thereof, referenced 58, adapted for slidable mating engagement with a corresponding trailing end 52A of base frame 52. Base frame 52 further includes opposing side edges defining an upwardly projecting and inwardly curved lip 52B which functions to receive corresponding outer edge portions of diffractor plates 52 when device 50 is configured in the non-deployed configuration.

As illustrated in FIGS. 5 and 6, each mechanically actuated vortex disruption device 50 is actuated via an actuation system, generally referenced as 60, including a control module 62. Control module 62 may receive an input signal from any suitable source including user switch activation, vehicle speed etc. and convert any such input into an output command for deployment and retraction of vortex disruption device 50. **In** one embodiment, the actuation system includes a linear actuator 64 having an actuating member 64A coupled to an anchor structure 66, and an actuating tube 64B having an end thereof adapted with a dowel 65 in sliding engagement with a track 68. Dowel 65 is further connected to a rigid member 70 having a terminal end thereof 70A received within a second track 72 connected to hinge 54. A rod 74 has a first end 74A pivotally connected to anchor structure 66, and a second end 74B pivotally connected to rigid member 70 as shown in FIGS. 5 and 6. An actuation signal from control module 62 activates linear actuator 64 whereby extension of actuating member 64A causes the actuating tube 64B to slide rearward such that dowel 65 slides rearward within track 68. This movement moves rigid member 70 to a generally vertical position whereby the terminal end 70A of rigid member 70 slides within track 72 thereby resulting in raised deployment of vortex disruption device 50. As noted above, linear actuator 64 may be electric, hydraulic, or any other suitable actuating mechanism. Further, other actuating mechanisms and linkages may be substituted for those disclosed to deploy and retract vortex disrupter devices 50.

Turning now to FIGS. 7 and 8, the vortex disrupter devices disclosed herein have been found to be effective in inhibiting the formation of vortex induced drag. FIG. 7 illustrates streamlines illustrative of air flowing over a moving tractor-trailer combination. What is most significant in the context of the present invention is the region directly behind the trailer wherein a low-pressure region and associated vortex flow. FIG. 8 depicts streamlines consistent with air flowing over a moving tractor trailer combination adapted with vortex disruption devices in accordance with the present invention. As shown in FIG. 8, the vortex disruption devices of the present invention alter the fluid dynamic flow in the region behind the trailer to minimize the formation of a low-pressure region and associated vortex generation. By minimizing the low pressure vortex generation behind the vehicle, drag is reduced and fuel efficiency is increased.

## Claims

1. A vortex disruption system for vehicles (100) having opposing sides and a roof, and terminating at a rear end (102), said system being **characterized by**:
a plurality of vortex disruption devices (10) adapted to be mounted to said vehicle (100), and in spaced relation with the vehicle rear end (102);
each vortex disruption device (10) including a leading end (12), a trailing end (14), and a bottom (20);
wherein at least said trailing end (14) or a portion of each of said plurality of vortex disruption devices (10) extends beyond the fluid dynamic boundary layer formed as the vehicle (100) moves through the air;
a left-hand planar surface (16) and a right-hand planar surface (16), said planar surfaces (16) originating at said leading end (12), and extending therefrom in diverging and inwardly slanted relation wherein said planar surfaces (16) join along a common upper edge (18).

2. The vortex disruption system according to claim 1, comprising a fastening apparatus affixing said vortex disruption devices (10) to the vehicle (100).

3. The vortex disruption system according to claim 1 or 2 comprising a trailing open end, wherein said leading end (12), said trailing end (14) and said bottom (20) define a perimeter, in particular an isosceles or triangular perimeter, that tapers outwardly from said leading end (12) to said trailing end (14); and with lower edges of said planar surfaces (16) diverging relative to one another, wherein top edges of said planar surfaces (16) join along said common upper edge (18).

4. The vortex disruption system according to one of claims 1 to 3,
wherein the bottom (20) of each of said plurality of vortex disruption devices (10) defines a recess (22) extending transversely across the bottom (20), and a pair of slotted apertures (24).

5. The vortex disruption system according to claim 4,
wherein said fastening apparatus (30) includes a strap threadedly disposed through said slotted apertures (24).

6. The vortex disruption system according to one of claims 1 to 5,
wherein said left-hand planar surface (16) and said right-hand planar surface (16) of each vortex disruption device (10) are pivotally connected and configurable between a deployed configuration, and a non-deployed configuration,
wherein said left-hand planar surface (16) and said right-hand planar surface (16) are disposed within the same plane.

7. The vortex disruption system according to claim 6, further including an actuation system (60) for configuring said vortex disruption device (10) between said deployed and non-deployed configuration.

8. The vortex disruption system according to one of claims 2 to 7,
wherein said fastening apparatus (30) affixes said vortex disruption devices (10) to the vehicle (100) in spaced relation with the vehicle rear end (102).

9. The vortex disruption system according to one of claims 1 to 8, wherein a plurality of vortex disruption devices (10) are affixed to the sides and/or the roof of the vehicle (100).

## Patentansprüche

1. Wirbelzerstörungssystem für Fahrzeuge (100) mit gegenüberliegenden Seiten und einem Dach, die an einem hinteren Ende (102) enden, wobei das System **gekennzeichnet ist durch**:
eine Mehrzahl von Wirbelzerstörungsvorrichtungen (10), die eingerichtet sind, an das Fahrzeug (100) anordenbar zu sein und in beabstandeter Beziehung zu dem hinteren Ende (102) des Fahrzeugs zu sein;
wobei jede Wirbelzerstörungsvorrichtung (10) ein vorderes Ende (12), ein hinteres Ende (14) und einen Boden (20) umfasst;
wobei zumindest das hintere Ende (14) oder ein Abschnitt jeder der Mehrzahl von Wirbelzerstörungsvorrichtungen (10) sich über die fluiddynamische Grenzschicht hinaus erstreckt, die gebildet wird, wenn sich das Fahrzeug (100) **durch** die Luft bewegt;
eine linksseitige ebene Oberfläche (16) und eine rechtsseitige ebene Oberfläche (16), wobei die ebenen Oberflächen (16) an dem vorderen Ende (12) beginnen und sich davon in divergierender und nach innen geneigter Beziehung erstrecken, wobei die ebenen Oberflächen (16) entlang einer gemeinsamen oberen Kante (18) zusammenlaufen.

2. Wirbelzerstörungssystem nach Anspruch 1, umfassend eine Befestigungsvorrichtung, mit der die Wirbelzerstörungsvorrichtungen (10) an das Fahrzeug (100) befestigbar sind.

3. Wirbelzerstörungssystem nach Anspruch 1 oder 2, umfassend ein offenes hinteres Ende, wobei das vordere Ende (12), das hintere Ende (14) und der Boden (20) einen Umfang, insbesondere einen gleichschenkligen oder dreieckigen Umfang, definieren, der sich vom vorderen Ende (12) zum hinteren Ende (14) nach außen verjüngt, und die unteren Kanten der ebenen Oberflächen (16) relativ zueinander divergieren, wobei obere Kanten der ebenen Oberflächen (16) entlang der gemeinsamen oberen Kante (18) zusammenlaufen.

4. Wirbelzerstörungssystem nach einem der Ansprüche 1 bis 3,
wobei der Boden (20) jeder der Mehrzahl von Wirbelzerstörungsvorrichtungen (10) eine Aussparung (22), die sich quer über den Boden (20) erstreckt, und ein Paar geschlitzter Öffnungen (24) definiert.

5. Wirbelzerstörungssystem nach Anspruch 4,
wobei die Befestigungsvorrichtung (30) ein Band umfasst, das durch die geschlitzten Öffnungen (24) gefädelt ist.

6. Wirbelzerstörungssystem nach einem der Ansprüche 1 bis 5,
wobei die linksseitige ebene Oberfläche (16) und die rechtsseitige ebene Oberfläche (16) jeder Wirbelzerstörungsvorrichtung (10) schwenkbar verbunden sind und zwischen einer ausgefahrenen Konfiguration und einer nicht-ausgefahrenen Konfiguration konfigurierbar sind,
wobei die linksseitige ebene Oberfläche (16) und die rechtsseitige ebene Oberfläche (16) in derselben Ebene angeordnet sind.

7. Wirbelzerstörungssystem nach Anspruch 6, ferner umfassend ein Betätigungssystem (60) zum Konfigurieren der Wirbelzerstörungsvorrichtung (10) zwischen der ausgefahrenen und nicht-ausgefahrenen Konfiguration.

8. Wirbelzerstörungssystem nach einem der Ansprüche 2 bis 7,
wobei die Befestigungsvorrichtung (30) die Wirbelzerstörungsvorrichtungen (10) an das Fahrzeug (100) in beabstandeter Beziehung mit dem hinteren Ende des Fahrzeugs (102) befestigt.

9. Wirbelzerstörungssystem nach einem der Ansprüche 1 bis 8, wobei eine Mehrzahl von Wirbelzerstörungsvorrichtungen (10) an die Seiten und/oder das Dach des Fahrzeugs (100) befestigt sind.

## Revendications

1. Système de rupture de vortex pour véhicules (100) ayant des côtés opposés et un toit, et se terminant à une extrémité arrière (102), ledit système étant **caractérisé par** :
- une pluralité de dispositifs de rupture de vortex (10) adaptés pour être montés sur ledit véhicule (100), et en relation espacée avec l'extrémité arrière du véhicule (102) ;
- chaque dispositif de rupture de vortex (10) comprenant une extrémité d'attaque (12), une extrémité de fuite (14) et un fond (20) ;
- dans lequel au moins ladite extrémité de fuite (14) ou une partie de chacun de ladite pluralité de dispositifs de rupture de vortex (10) s'étend au-delà de la couche limite de dynamique des fluides formée lorsque le véhicule (100) se déplace dans l'air ;
- une surface plane gauche (16) et une surface plane droite (16), lesdites surfaces planes (16) prenant naissance à ladite extrémité d'attaque (12) et s'étendant à partir de celle-ci dans une relation divergente et inclinée vers l'intérieur dans lequel lesdites surfaces planes (16) se rejoignant le long d'un bord supérieur commun (18).

2. Système de rupture de vortex selon la revendication 1, comprenant un appareil de fixation fixant lesdits dispositifs de rupture de vortex (10) au véhicule (100).

3. Système de rupture de vortex selon la revendication 1 ou 2 comprenant une extrémité finale ouverte, dans lequel ladite extrémité d'attaque (12), ladite extrémité de fuite (14) et ledit fond (20) définissent un périmètre, en particulier un périmètre isocèle ou triangulaire, qui se rétrécit vers l'extérieur depuis ladite extrémité d'attaque (12) jusqu'à ladite extrémité de fuite (14) ; et avec des bords inférieurs desdites surfaces planes (16) divergeant l'un par rapport à l'autre, dans lequel les bords supérieurs desdites surfaces planes (16) se rejoignant le long dudit bord supérieur commun (18).

4. Système de rupture de vortex selon l'une des revendications 1 à 3, dans lequel le fond (20) de chacun de ladite pluralité de dispositifs de rupture de vortex (10) définit un évidement (22) s'étendant transversalement à travers le fond (20), et une paire d'ouvertures fendues (24).

5. Système de rupture de vortex selon la revendication 4, dans lequel ledit appareil de fixation (30) comprend une sangle disposée par filetage à travers lesdites ouvertures fendues (24).

6. Système de rupture de vortex selon l'une des revendications 1 à 5, dans lequel ladite surface plane gauche (16) et ladite surface plane droite (16) de chaque dispositif de rupture de vortex (10) sont reliées de manière pivotante et configurables entre une configuration déployée et une configuration non déployée, dans lequel ladite surface plane gauche (16) et ladite surface plane droite (16) sont disposées dans le même plan.

7. Système de rupture de vortex selon la revendication 6, comprenant en outre un système d'actionnement (60) pour configurer ledit dispositif de rupture de vortex (10) entre ladite configuration déployée et non déployée.

8. Système de rupture de vortex selon l'une des revendications 2 à 7, dans lequel ledit appareil de fixation (30) fixe lesdits dispositifs de rupture de vortex (10) au véhicule (100) en relation espacée avec l'extrémité arrière du véhicule (102).

9. Système de rupture de vortex selon l'une des revendications 1 à 8, dans lequel une pluralité de dispositifs de rupture de vortex (10) sont fixés sur les côtés et/ou sur le toit du véhicule (100).
